(19) Europäisches Patentamt
European Patent Office
Office européen des brevets

(11) **EP 2 237 136 A1**

(12) **EUROPEAN PATENT APPLICATION**

(43) Date of publication:
**06.10.2010 Bulletin 2010/40**

(51) Int Cl.:
***G06F 3/042*** *(2006.01)*

(21) Application number: **09175242.8**

(22) Date of filing: **06.11.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **31.03.2009 US 414674**

(71) Applicant: **Arima Lasers Corp.**
**Dashi Township, Taoyuan County 335 (TW)**

(72) Inventor: **Wu, Ming-Cho**
**Taoyuan County 325 (TW)**

(74) Representative: **Lang, Christian**
**LangRaible GbR**
**Patent- und Rechtsanwälte**
**Herzog-Wilhelm-Straße 22**
**80331 München (DE)**

(54) **Optical detection apparatus and method**

(57)    An optical detection apparatus includes a scanning device, a sensor, and a distinguishing module. The scanning device is positioned to scan a detection region with a scan light beam, in which the incident angle of the scan light beam varies with time. The sensor is positioned to sense a plurality of reflected scan light beams respectively generated by a plurality of actual touches within the detection region. The distinguishing module is operative to distinguish the actual touches from a plurality of ghost touches according to time signals upon which the plurality of reflected scan light beams are sensed by the sensor.

Fig. 1

**Description**

**BACKGROUND**

Technical Field

The present disclosure relates to a touch panel. More particularly, the present disclosure relates to a touch panel including optical detection means.

Description of Related Art

"Touch panel" is a device that can detect the presence and location of a touch within the detection region. Various types of touch panel, such as a resistive touch panel, a capacitive touch panel, and an optical touch panel, have been developed for such purpose.

**SUMMARY**

According to one embodiment, an optical detection apparatus includes a scanning device, a sensor, and a distinguishing module. The scanning device is positioned to scan a detection region with a scan light beam, in which the incident angle of the scan light beam varies with time. The sensor is positioned to sense a plurality of reflected scan light beams respectively generated by a plurality of actual touches within the detection region. The distinguishing module is operative to distinguish the actual touches from a plurality of ghost touches according to time signals upon which the plurality of reflected scan light beams are sensed by the sensor.

According to another embodiment, an optical detection apparatus includes a planar light source, a first linear sensor, an imaging device, a scanning device, a second linear sensor, a location processing module, and a distinguishing module. The planar light source is positioned to provide a planar light to a detection region such that the planar light is reflected by a plurality of actual touches within the detection region and the reflected lights are then sensed by the first linear sensor. The imaging device is positioned to focus the reflected lights onto the first linear sensor and forms a plurality of images. The scanning device is positioned to scan the detection region with a scan light beam, in which the incident angle of the scan light beam varies with time, and the scan light beam is reflected by the actual touches. The second linear sensor is positioned to sense the reflected scan light beams. The location processing module is operative to determine the locations of the actual touches and a plurality of ghost touches according to the incident angles of the reflected lights and the reflected scan light beams by way of triangulation. The distinguishing module is operative to distinguish the actual touches from the ghost touches according to time signals upon which the reflected scan light beams are sensed by the second linear sensor.

According to yet another embodiment, an optical detection method includes the following steps. A detection region is scanned with a scan light beam, in which the incident angle of the scan light beam varies with time. A plurality of reflected scan light beams respectively generated by a plurality of actual touches within the detection region are sensed. The actual touches are distinguished from a plurality of ghost touches according to time signals upon which the reflected scan light beams are sensed.

The foregoing steps are not recited in the sequence in which the steps are performed. That is, unless the sequence of the steps is expressly indicated, the sequence of the steps is interchangeable, and all or part of the steps may be simultaneously, partially simultaneously, or sequentially performed.

**BRIEF DESCRIPTION OF THE DRAWINGS**

Fig. 1 is a front view of an optical detection apparatus according to one embodiment;
Fig. 2 is a front view of the first sensor system of Fig. 1;
Fig. 3 is a graph of a first signal and a second signal generated by the linear sensor of Fig. 2;
Fig. 4 is a graph of a first signal and a second signal according to another embodiment;
Fig. 5 is a front view of the second sensor system of Fig. 1; and
Fig. 6 is a detailed view of the part 6 of Fig. 1.

**DETAILED DESCRIPTION**

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically depicted in order to simplify the drawings.

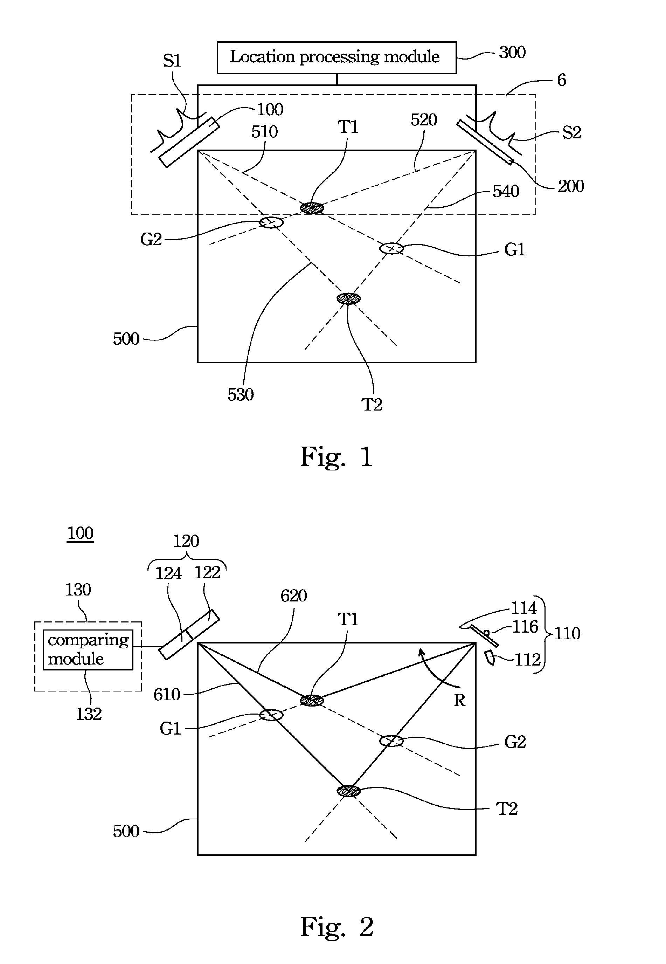

Fig. 1 is a front view of an optical detection apparatus according to one embodiment. The optical detection apparatus includes a first sensor system 100, a second sensor system 200, and a location processing module 300. In use, the first sensor system 100 and the second sensor system 200 can sense at least one touch within a detection region 500. The location processing module 300 may determine the location of the touch according to the detection result of the first sensor system 100 and the second sensor system 200.

However, as shown in Fig. 1, problems may arise if two points are simultaneously touched, with "simultaneously" referring to touches that happen within a given time interval.

Fig. 1 shows two actual touches T1, T2 and two resulting location signals S1, S2 generated from the first sensor system 100 and the second sensor system 200 respectively. Each of the location signals S1, S2 has two peaks indicative of two lines where the actual touches T1, T2 may be located. The actual touch T1 can be triangulated from the lines 510, 520, and the actual touch T2 can be triangulated from the lines 530, 540. However, the lines 510, 540 intersect at G1 and the lines 520, 530 intersect at G2, and thus the lines 510, 520, 530, 540 can triangulate to corresponding ghost touches G1, G2, which are all possible touches but are not real. The following will illustrate how to distinguish the actual touches T1, T2 from the ghost touches G1, G2 by the first sensor system 100.

Fig. 2 is a front view of the first sensor system 100 of Fig. 1. The first sensor system 100 includes a scanning device 110, a linear sensor 120, and a distinguishing module 130. The scanning device 110 is positioned to scan the detection region 500 with a scan light beam, in which the incident angle of the scan light beam varies with time. The linear sensor 120 is positioned to sense a plurality of reflected scan light beams 610, 620 respectively generated by the actual touches T1, T2 within the detection region 500. The distinguishing module 130 is operative to distinguish the actual touches T1, T2 from the ghost touches G1, G2 according to time signals upon which the plurality of reflected scan light beams 610, 620 are sensed by the linear sensor 120.

The scanning device 110 includes a light source 112, a mirror 114, and a rotating actuator 116. The light source 112 is operative to generate the scan light beam. The mirror 114 is positioned to direct the scan light beam into the detection region 500. The rotating actuator 116 is coupled to the mirror 114 for rotating the mirror 114 and thereby varying the incident angle of the scan light beam in accordance with a driving signal.

The light source 112 may be a laser diode, for example a 780 nm laser diode (such as ADL-78101-TL available from Arima Lasers Corporation), an 808 nm laser diode (such as ADL-80Y01-TL available from Arima Lasers Corporation) or an 850 nm laser diode (such as ADL-85051-TL available from Arima Lasers Corporation), such that the scan light beam is a collimated light beam.

It is appreciated that many other devices may be used as the light source 112, for instance, a light emitting diode may be substituted for the laser diode as the light source 112.

The linear sensor 120 may include a plurality of photodetectors arranged in a linear array. The linear sensor 120 may detect the locations where the reflected scan light beams 610, 620 hit, and then the incident angles of the reflected scan light beams 610, 620 are resolved according to the locations where the reflected scan light beams 610, 620 hit. Then, the incident angles of the reflected scan light beams 610, 620 are outputted to the location processing module 300 of Fig. 1 to resolve the locations of the actual touches T1, T2.

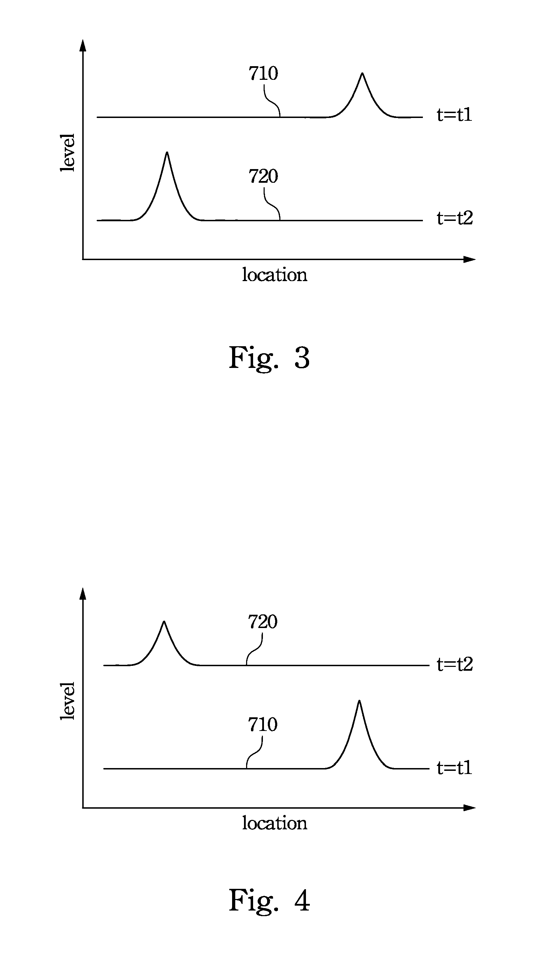

Specifically, when one of the reflected scan light beams, e.g. the reflected scan light beam 610, hits one or more of the photodetectors arranged on the right side 122 of the linear sensor 120, the reflected scan light beam 610 is converted into a first signal as indicated by reference number 710 of Fig. 3. The first signal may be a peak indicative of the location where the reflected scan light beam 610 hits. Furthermore, the first signal represents a first time point t1 upon which the first signal 710 occurs, *i.e.* the time point upon which the reflected scan light beam 610 hits the linear sensor 120.

Similarly, when another one of the reflected scan light beams, e.g. the reflected scan light beam 620, hits one or more of the photodetectors arranged on the left side 124 of the linear sensor 120, the reflected scan light beam 620 is converted into a second signal as indicated by reference number 720 of Fig. 3. The second signal 720 may be a peak indicative of the location where the reflected scan light beam 620 hits. Furthermore, the second signal 720 represents a second time point t2 upon which the second signal 720 occurs, *i.e.* the time point upon which the reflected scan light beam 620 hits the linear sensor 120.

The distinguishing module 130 includes a comparing module 132. The comparing module 132 is operative to compare the first time point t1 with the second time point t2.

In the present embodiment, assuming that the mirror 114 is rotated clockwise R, the points T1, T2 should be resolved to be actual touches when the first time point t1 is earlier than the second time point t2. Conversely, the points G1, G2 should be resolved to be actual touches when the second signal 720 occurs earlier than the first signal 710 (as shown in Fig. 4).

The photodetectors of the linear sensor 120 may be photodiodes. It is appreciated that many other devices may be used as the photodetectors, for instance, phototransistors may be substituted for the photodiodes as the photodetectors. Furthermore, in one embodiment, the linear sensor 120 may be a linear Complementary Metal-Oxide Semiconductor sensor (linear CMOS sensor) or a linear Charge-Coupled Device sensor (linear CCD sensor).

The first sensor system 100 described above may be made and used in accordance with the optical detection apparatus disclosed in copending application Serial No.: 12/414,674, filed on March 31, 2009, which application is hereby incorporated herein by reference.

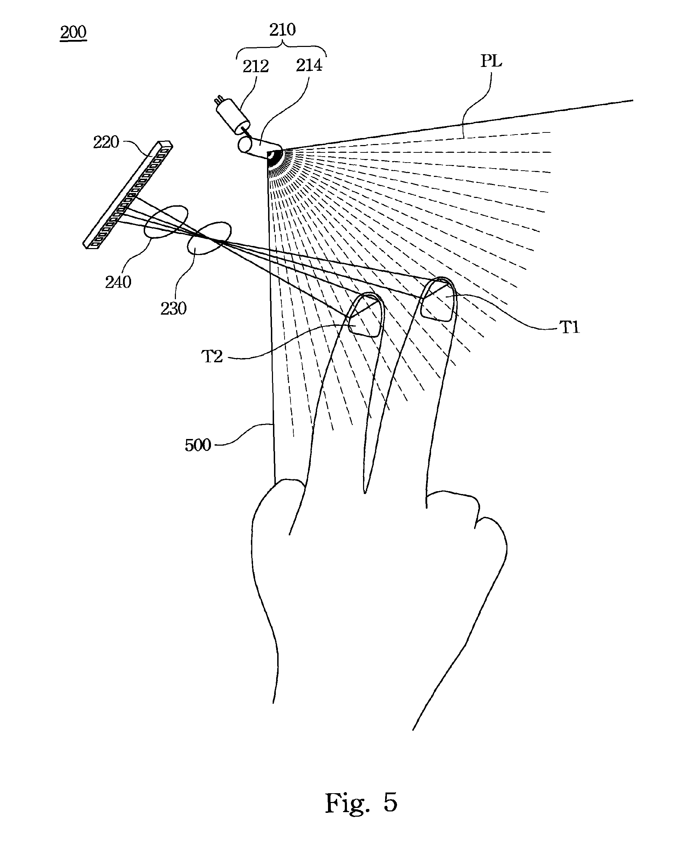

Fig. 5 is a front view of the second sensor system 200 of Fig. 1. The second sensor system 200 includes a planar light source 210, a linear sensor 220, and an imaging device 230. The planar light source 210 is positioned to provide a planar light PL to the detection region 500 such that the planar light PL is reflected by the actual touches T1, T2 within the detection region 500. The linear sensor 220 is positioned to sense the reflected lights. The imaging device 230 is positioned to focus the reflected lights onto the linear sensor 220 and form a plurality of images.

The planar light source 210 may include a collimated light source 212 and an optical lens 214. The collimated light source 212 is operative to provide a collimated light beam. The optical lens 214 is positioned to transform the collimated light beam into the planar light PL and subsequently direct the planar light PL into the detection region 500.

In practice, the collimated light source 212 may be an infrared laser diode module. Furthermore, there may be an infrared long pass filter 240 or a band pass filter positioned to prevent visible light entering the linear sensor 220 when the collimated light source 212 is an infrared laser diode module. In the present embodiment, the light source is an 850 nm laser diode. The infrared long pass filter 240 or the band pass filter allows the infrared light of more than 750 nm in wavelength, e.g. the reflected lights, to pass therethrough and incident onto the linear sensor 220, such that the linear sensor 220 would not be interfered with the ambient light. The infrared long pass filter 240 may be an optical filter located between the imaging device 230 and the linear sensor 220 or a coating on the imaging device 230.

The optical lens 214 may be a line-generating lens, which includes, but is not limited to, a cylindrical lens. In another embodiment, the line-generating lens may be rotated or swiveled rapidly across the detection region so as to scan the detection region with the planar light.

The linear sensor 220 may detect the locations where the reflected lights hit, and the incident angles of the reflected lights are resolved according to the locations where the reflected lights hit. Then, the incident angles of the reflected lights are outputted to the location processing module 300 of Fig. 1 to resolve the locations of the actual touches T1, T2.

The linear sensor 220 may include a plurality of photodetectors arranged in a linear array. The photodetectors may be photodiodes. It is appreciated that many other devices may be used as the photodetectors, for instance, phototransistors may be substituted for the photodiodes as the photodetectors. Furthermore, in one embodiment, the linear sensor 220 may be a linear Complementary Metal-Oxide Semiconductor sensor (linear CMOS sensor) or a linear Charge-Coupled Device sensor (linear CCD sensor).

The imaging device 230 may be a single convex lens or a lens set. In this embodiment, the imaging device 230 is a single convex lens.

The second sensor system 200 described above may be made and used in accordance with the module of the optical detection device disclosed in copending application Serial No.: 12/371,228, filed on February 13, 2009, which application is hereby incorporated herein by reference.

Reference is made to Fig. 1. The location processing module 300 may be operative to determine the locations of the touches according to the incident angles of the reflected scan light beams and the reflected lights by way of triangulation.

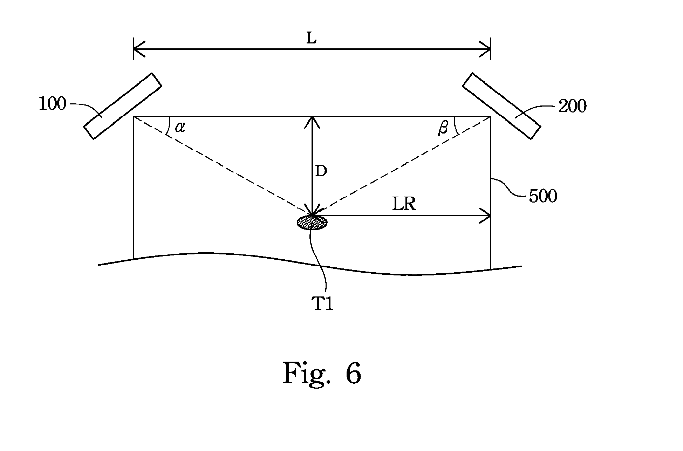

Take the actual touch T1 of Fig. 6 for example, the coordinates and distance to the actual touch T1 can be calculated giving the length L of the top side of the detection region 500, the incident angle $\alpha$ of the reflected scan light beam and the incident angle $\beta$ of the reflected light. Specifically, the distance D between the top side of the detection region 500 and the actual touch T1 may be obtained by the following Formula I:

$$D=L/(1/\tan\alpha+1/\tan\beta)\dots\dots\dots\dots\dots\dots\dots\dots\dots\dots\text{Formula I}$$

Thereafter, the distance LR between the right side of the detection region 500 and the actual touch T1 may be obtained by the following Formula II:

$$LR=D\cot\beta\dots\dots\dots\dots\dots\dots\dots\dots\dots\dots\dots\dots\dots\text{Formula II}$$

Therefore, the location of the actual touch T1 may be described as (LR,D) by the Cartesian coordinate system. In the same way, the locations of the actual touches T1, T2 of Fig. 1 can be determined.

The location processing module 300 described above may be made and used in accordance with the processing unit disclosed in copending application Serial No.: 12/414,674, filed on March 31, 2009 or another copending application Serial No.: 12/371,228, filed on February 13, 2009, these applications are hereby incorporated herein by reference.

In use, the first sensor system 100 may be used to find the incident angle(s) of the reflected scan light beam (s), and the second sensor system 200 may be used to find the incident angle(s) of the reflected light(s). Then, the location processing module 300 may determine the location(s) of the touch(es) according to the incident angles of the reflected scan light beam(s) and the reflected light(s).

When more than one touch is present, the first sensor system 100 may be used to distinguish the actual touches from the ghost touches. It is appreciated that the first sensor system 100 may also be configured to other optical detection apparatuses to solve the "ghost touches" problem.

**Claims**

1. An optical detection apparatus comprising:

   a scanning device positioned to scan a detection region with a scan light beam, in which the incident angle of the scan light beam varies with time;
   a sensor positioned to sense a plurality of reflected scan light beams respectively generated by a plurality of actual touches within the detection region; and
   a distinguishing module operative to distinguish the actual touches from a plurality of ghost touches according to time signals upon which the plurality of reflected scan light beams are sensed by the sensor.

2. The optical detection apparatus of claim 1, wherein the sensor comprises:

   at least one first photodetector array positioned to convert one of the reflected scan light beams into a first signal; and
   at least one second photodetector array positioned to convert another one of the reflected scan light beams into a second signal.

3. The optical detection apparatus of claim 2, wherein the distinguishing module comprises:

   a comparing module operative to compare a first time point upon which the first signal occurs and a second time point upon which the second signal occurs.

4. The optical detection apparatus of claim 1, wherein the scanning device comprises:

   a light source operative to generate the scan light beam;
   a mirror positioned to direct the scan light beam into the detection region; and
   a rotating actuator coupled to the mirror for rotating the mirror and thereby varying the incident angle of the scan light beam in accordance with a driving signal.

5. An optical detection apparatus comprising:

   a planar light source positioned to provide a planar light to a detection region such that the planar light is reflected by a plurality of actual touches within the detection region;
   a first linear sensor positioned to sense the reflected lights;
   an imaging device positioned to focus the reflected lights onto the first linear sensor and forms a plurality of images;
   a scanning device positioned to scan the detection region with a scan light beam, in which the incident angle of the scan light beam varies with time, and the scan light beam is reflected by the actual touches;
   a second linear sensor positioned to sense the reflected scan light beams;
   a location processing module operative to determine the locations of the actual touches and a plurality of ghost touches according to the incident angles of the reflected lights and the reflected scan light beams by way of triangulation; and
   a distinguishing module operative to distinguish the actual touches from the ghost touches according to time signals upon which the reflected scan light beams are sensed by the second linear sensor.

6. The optical detection apparatus of claim 5, wherein the second linear sensor comprises:

at least one first photodetector array positioned to convert one of the reflected scan light beams into a first signal; and
at least one second photodetector array positioned to convert another one of the reflected scan light beams into a second signal.

7. The optical detection apparatus of claim 6, wherein the distinguishing module comprises:

a comparing module operative to compare a first time point upon which the first signal occurs and a second time point upon which the second signal occurs.

8. The optical detection apparatus of claim 5, wherein the scanning device comprises:

a light source operative to generate the scan light beam;
a mirror positioned to direct the scan light beam into the detection region; and
a rotating actuator coupled to the mirror for rotating the mirror and thereby varying the incident angle of the scan light beam in accordance with a driving signal.

9. The optical detection apparatus of claim 5, wherein the planar light source comprises:

a collimated light source operative to provide a collimated light beam; and
an optical lens positioned to transform the collimated light beam into the planar light and subsequently direct the planar light into the detection region.

10. The optical detection apparatus of claim 9, wherein the collimated light source is an infrared laser diode module.

11. The optical detection apparatus of claim 10, further comprising:

an infrared long pass filter or a band pass filter positioned to prevent visible light entering the first linear sensor.

12. The optical detection apparatus of claim 9, wherein the optical lens is a line-generating lens or a cylindrical lens.

13. An optical detection method comprising:

scanning a detection region with a scan light beam, in which the incident angle of the scan light beam varies with time;
sensing a plurality of reflected scan light beams respectively generated by a plurality of actual touches within the detection region; and
distinguishing the actual touches from a plurality of ghost touches according to time signals upon which the reflected scan light beams are sensed.

14. The optical detection method of claim 13, wherein sensing the reflected scan light beams comprises:

converting one of the reflected scan light beams into a first signal; and
converting another one of the reflected scan light beams into a second signal.

15. The optical detection method of claim 14, wherein distinguishing the actual touches from the ghost touches comprises:

comparing a first time point upon which the first signal occurs and a second time point upon which the second signal occurs.

Fig. 1

Fig. 2

# Fig. 3

# Fig. 4

Fig. 5

Fig. 6

Europäisches
Patentamt
European
Patent Office
Office européen
des brevets

## EUROPEAN SEARCH REPORT

Application Number

EP 09 17 5242

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 229 529 B1 (YANO TAKASHI [JP] ET AL) 8 May 2001 (2001-05-08) * figures 8,11,14-18 * * column 3, line 48 - column 4, line 30 * * column 6, line 20 - column 7, line 29 * * column 8, line 40 - column 9, line 5 * * column 10, line 22 - column 12, line 32 * ----- | 1-15 | INV. G06F3/042 |
| A | US 6 563 491 B1 (OMURA KATSUYUKI [JP]) 13 May 2003 (2003-05-13) * figures 1-4,5a-5c * * column 5, line 1 - column 8, line 40 * ----- | 1-15 | |
| | | | TECHNICAL FIELDS SEARCHED (IPC) |
| | | | G06F |

The present search report has been drawn up for all claims

| Place of search | Date of completion of the search | Examiner |
|---|---|---|
| The Hague | 29 April 2010 | Piriou, Nominoë |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**ANNEX TO THE EUROPEAN SEARCH REPORT
ON EUROPEAN PATENT APPLICATION NO.**

EP 09 17 5242

This annex lists the patent family members relating to the patent documents cited in  the above-mentioned European search report.
The members are as contained in the European Patent Office EDP file on
The European Patent Office is in no way liable for these particulars which are merely given for the purpose of information.

29-04-2010

| Patent document cited in search report | | Publication date | Patent family member(s) | | Publication date |
|---|---|---|---|---|---|
| US 6229529 | B1 | 08-05-2001 | NONE | | |
| US 6563491 | B1 | 13-05-2003 | JP | 4057200 B2 | 05-03-2008 |
| | | | JP | 2001084107 A | 30-03-2001 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 12414674 B

- US 12371228 B